# EUROPÄISCHE PATENTSCHRIFT

(11) **EP 3 424 319 B1**
(45) Veröffentlichungstag und Bekanntmachung des Hinweises auf die Patenterteilung: **29.04.2020**
(21) Anmeldenummer: 18401057.7
(22) Anmeldetag: 29.06.2018
(51) Int. Cl.: A01M 7/00

(54) **EINSPÜLVORRICHTUNG FÜR EINE LANDWIRTSCHAFTLICHE FELDSPRITZE**
FEED-IN DEVICE FOR AN AGRICULTURAL FIELD SPRAYING DEVICE
DISPOSITIF D'INJECTION POUR UN PULVÉRISATEUR AGRICOLE

(30) Priorität: 07.07.2017 DE 102017115226
(43) Veröffentlichungstag der Anmeldung: 09.01.2019
(73) Patentinhaber: Amazonen-Werke H. Dreyer GmbH & Co. KG, 49205 Hasbergen (DE)
(72) Erfinder: Wolf, Jan, 34119 Kassel (DE); Holtkötter, Christian, 33775 Versmold (DE); Klemann, Timo, 49191 Belm (DE); Austermann, Stefan, 48291 Telgte (DE)

(56) Entgegenhaltungen:
- EP-A1- 2 356 904
- DE-A1-102014 109 372
- US-A- 5 125 576
- US-A1- 2004 040 616

## Beschreibung

Die Erfindung betrifft eine Einspülvorrichtung für eine landwirtschaftliche Feldspritze gemäß dem Oberbegriff des Patentanspruches 1.

Eine Einspülvorrichtung ist beispielsweise in der DE 10 2014 107 039 A1 beschrieben. Landwirtschaftliche Feldspritzen weisen derartige Einspülvorrichtungen auf, um durch das Versetzen großer Mengen in einem Vorratsbehälter mitgeführter Trägerflüssigkeit, typischerweise Wasser, mit Wirkstoffmitteln, eine Spritzbrühe bedarfsgerechter Konzentration zu erzeugen. Als Wirkstoffmittel kommen üblicherweise Düngemittel und/oder Pflanzenschutzmittel, wie beispielsweise Fungizide, Herbizide oder Pestizide, zum Einsatz. Dabei liegen die Wirkstoffmittel in konzentrierter Form als Flüssigkeit und/oder Granulat und/oder Pulver in kleinen Gebinden, den Wirkstoffmittelbehältern, vor. Die Wirkstoffmittel werden in einen der Einspülvorrichtung zugeordneten Einspülbehälter gegeben, dort mit der Trägerflüssigkeit vermischt und anschließend über den Flüssigkeitskreislauf der Feldspritze in den Vorratsbehälter geleitet. Oftmals bleiben in den Wirkstoffmittelbehältern Restmengen der Wirkstoffmittel zurück.

Die verwendeten Wirkstoffmittel sind in ihrer konzentrierten Form als gesundheitsgefährdend einzustufen. Aus diesem Grund sind durch Restmengen kontaminierte Wirkstoffmittelbehälter aufwändig und kostenintensiv als Gefahrstoffe zu entsorgen. Werden sie nicht fachgerecht entsorgt, besteht die Gefahr, dass durch sie die Umwelt erheblich belastet wird.

Durch das Zurückbleiben von Restmengen in den Wirkstoffmittelbehältern ergibt sich zudem der Nachteil, dass diese Restmengen nicht in die Trägerflüssigkeit gelangen können. Da aufgrund ihrer hohen Konzentration bereits geringe Wirkstoffmittelmengen die Konzentration der Spritzbrühe erheblich beeinflussen können, wird durch die nicht verfügbaren Restmengen die bedarfsgerechte Dosierung der Wirkstoffmittel erheblich erschwert. Diese Problematik tritt analog auch dann auf, wenn die Dosierung unter Zuhilfenahme von wiederverwendbaren Messbehältnissen erfolgt, in welche dann wiederum Restmengen zurückbleiben können.

Zur Behebung dieser Nachteile ist beispielsweise aus der DE 10 2014 107 039 A1 oder aus der DE 35 46 170 A1 eine innerhalb des Einspülbehälters angeordnete Spüleinrichtung bekannt, welche zum Spülen der Wirkstoffmittelbehälter eingerichtet ist. Dazu ist die Spüleinrichtung im Wesentlichen zylindrisch, insbesondere als Spüllanze, ausgebildet und weist ein Anschlussstück auf, welches zur Zuführung von Spülmittel eingerichtet und mit dem Flüssigkeitskreislauf der Feldspritze fluidleitend verbunden ist. Das Anschlussstück ist typischerweise an einem Ende der im Wesentlichen zylindrisch geformten Spüleinrichtung angeordnet. Als Spülmittel dient typischerweise die verwendete Trägerflüssigkeit, insbesondere Wasser.

Die Spüleinrichtung weist zudem einen Spülkopf sowie eine Spüldüse auf, welche über einen zur Förderung von Spülmittel eingerichteten Leitungsabschnitt fluidleitend mit dem Anschlussstück verbunden ist. Die Spüldüse ist typischerweise im Bereich des äußeren Endes der Spüleinrichtung angeordnet.

Der Spülkopf ist gegenüber dem Leitungsabschnitt in axialer Richtung gleitverschieblich, wobei durch die axiale Gleitverschiebung des Spülkopfes gegen den Leitungsabschnitt eine Fluidverbindung zwischen dem Leitungsabschnitt und der Spüldüse herstellbar ist.

Typischerweise wird ein Wirkstoffmittelbehälter, der flaschen- oder kanisterartig ausgeführt sein kann, zum Spülen von einer Bedienperson über die Spüleinrichtung gestülpt und gegen den Spülkopf und/oder das äußere Ende der Spüleinrichtung gedrückt. Die derart, insbesondere axial, ausgeübte Druckkraft bewirkt die Gleitverschiebung des Spülkopfes gegen den Leitungsabschnitt und ermöglicht somit das Einströmen des unter Druck stehenden Spülmittels durch die Spüldüse in den Wirkstoffmittelbehälter. Ein hoher Druck bewirkt eine hohe Strömungsgeschwindigkeit des Spülmittels, welche für eine gute Reinigungswirkung wesentlich ist.

Zugleich ergibt sich daraus aber der Nachteil, dass das einströmende Spülmittel im Wesentlichen gegen den Boden des Wirkstoffmittelbehälters strömt. Daher ist die Strömungsgeschwindigkeit des Spülmittels und somit die Reinigungswirkung im Öffnungsbereich des Wirkstoffmittelbehälters gering. Dadurch ist die Reinigung des Wirkstoffmittelbehälters ungleichmäßig und es können noch immer signifikante Restmengen des Wirkstoffmittels im Wirkstoffmittelbehälter zurückbleiben. Insbesondere kann dies gegen gesetzliche Vorgaben zur Reinigung der Wirkstoffmittelbehälter verstoßen.

Der Erfindung liegt daher die Aufgabe zugrunde, eine Einspülvorrichtung mit einer Spüleinrichtung bereitzustellen, welche im Öffnungsbereich zu spülender Wirkstoffmittelbehälter eine verbesserte Reinigungswirkung entfaltet.

Zur Lösung dieser Aufgabe sind die kennzeichnenden Merkmale des Anspruchs 1 vorgesehen.

Die Erfindung macht sich die Erkenntnis zunutze, dass die Öffnungsberandung eines Wirkstoffmittelbehälters auf die Auskragung des Spülkopfes aufgesetzt werden kann. Vermittels des derartig auf die Auskragung des Spülkopfes aufgesetzten Wirkstoffmittelbehälters kann eine Bedienperson eine, vorzugsweise axiale, Kraftwirkung auf den Spülkopf aufbringen. Diese Kraftwirkung bewirkt die Gleitverschiebung des Spülkopfes gegen den Leitungsabschnitt und somit das Einströmen des Spülmittels in den Wirkstoffmittelbehälter. Durch diese Maßnahme wird erreicht, dass sich während des Einströmens des Spülmittels in den Wirkstoffmittelbehälter im Bereich des äußeren Endes der Spüleinrichtung angeordnete Spüldüse im Öffnungsbereich des Wirkstoffmittelbehälters befindet. Dies bewirkt eine verbesserte Reinigungswirkung des Öffnungsbereichs des Wirkstoffmittelbehälters.

Der Bereich des äußeren Endes der Spüleinrichtung erstreckt sich ausgehend von dem (baulichen) äußeren Ende der Spüleinrichtung einige, vorzugsweise höchstens sechs, Zentimeter in axialer Richtung der Spüleinrichtung.

Eine bevorzugte Ausführungsform der erfindungsgemäßen Einspülvorrichtung ist dadurch gegeben, dass die Spüldüse am äußeren Ende der Spüleinrichtung angeordnet ist oder das äußere Ende der Spüleinrichtung bildet. Dadurch wird erreicht, dass sich bei einem Spülvorgang eines Wirkstoffmittelbehälters die das Spülmittel ausbringende Spüldüse ausreichend tief im Inneren des Wirkstoffmittelbehälters befindet, um dort eine gute Reinigungswirkung zu entfalten und gleichzeitig ein Austreten des Spülmittel-Wirkstoffmittel-Gemisches und eine damit einhergehende Gefährdung einer den Spülvorgang durchführenden Bedienperson zu verhindern.

Eine besonders vorteilhafte Ausführungsform der Erfindung wird erreicht, indem die Spüldüse derart eingerichtet ist, dass sich der von der Spüldüse ausgebrachte Spülmittelkegel im Wesentlichen in radialer Richtung der Spüleinrichtung erstreckt. Auf diese Weise ist sichergestellt, dass das einströmende Spülmittel mit hoher Strömungsgeschwindigkeit auf die seitlichen Wandungen des Wirkstoffmittelbehälters trifft. Dadurch wird eine optimale Reinigung der seitlichen Wandungen des Wirkstoffmittelbehälters erreicht, wodurch die Reinigung im Öffnungsbereich des Wirkstoffmittelbehälters verbessert wird.

Es ist vorteilhaft, dass die Auskragung vom äußeren Ende der Spüleinrichtung zwischen 15 mm und 60 mm, bevorzugt zwischen 20 mm und 40 mm besonders bevorzugt 25 mm, beabstandet ist. Durch diese Maßnahme ist sichergestellt, dass sich die Spüldüse während eines Spülvorganges eines Wirkstoffmittelbehälters ausreichend tief im Inneren des Wirkstoffmittelbehälters befindet, sodass keine Gefahr besteht, dass das mit hoher Strömungsgeschwindigkeit in den Wirkstoffmittelbehälter einströmendes und mit abgespültem Wirkstoffmittel versetztes Spülmittel durch ein eventuelles Austreten, beispielsweise durch Herausspritzen, eine Bedienperson gefährdet. In vorteilhafter Weise wird zudem erreicht, dass sich die im Bereich des äußeren Endes der Spüleinrichtung befindliche Spüldüse während eines Spülvorganges im zu reinigenden Öffnungsbereich des Wirkstoffmittelbehälters befindet.

Die Wirkstoffmittelbehälter sind typischerweise flaschen- oder kanisterartig ausgeführt und können somit in ihrem Öffnungsbereich eine Engstelle, beispielsweise einen Flaschenhals, aufweisen. Durch die erfindungsgemäße Anordnung und der Auskragung ist sichergestellt, dass sich durch das Aufsetzen der Öffnungsberandung auf die Auskragung des Spülkopfes die Spüldüse während eines Spülvorgangs innerhalb der Engstelle des Öffnungsbereiches befindet.

Es wird ein Vorteil dadurch erreicht, dass die Auskragung auf ihrer dem äußeren Ende der Spüleinrichtung zugewandten Seite hakenförmig ausgebildet ist. Durch die hakenförmige Ausbildung der dem äußern Ende der Spüleinrichtung zugewandten Seite der Auskragung wird eine Möglichkeit geschaffen, dass die Öffnungsberandung eines Wirkstoffmittelbehälters in die hakenförmige Ausformung der Auskragung eingesetzt werden kann. In vorteilhafter Weise wird somit ein Abrutschen des Wirkstoffmittelbehälters von der Auskragung verhindert.

Bringt beispielsweise eine Bedienperson mittels des Wirkstoffmittelbehälters die zum Aktivieren der Spüleinrichtung erforderliche axiale Kraft gegen die Auskragung auf, ist aus Gründen der Arbeitssicherheit ein sicherer Halt des Wirkstoffmittelbehälters auf der Auskragung wesentlich, um eine Gefährdung der Bedienperson durch ein plötzliches Austreten von mit Wirkstoffmittel versetzten Spülmittel zu vermeiden.

Die Spüleinrichtung ist innerhalb des Einspülbehälters der Einspülvorrichtung angeordnet, damit das beim Spülen eines Wirkstoffmittelbehälters entstehende Spülmittel-Wirkstoffmittel-Gemisch in analoger Weise zum beschriebenen Erzeugen der Spritzbrühe in den Vorratsbehälter geleitet werden kann. Vorzugsweise ist dabei die zylindrisch ausgeformte Spüleinrichtung derart angeordnet, dass die Zylinderlängsachse zumindest im Wesentlichen in aufrechter Richtung verläuft.

Die dem äußeren Ende der Spüleinrichtung zugewandte Seite der Auskragung entspricht somit im Wesentlichen der Oberseite der Auskragung.

Es ist erfindungsgemäß, dass die Auskragung auf ihrer dem äußeren Ende der Spüleinrichtung zugewandten Seite eine Rastkerbe aufweist. Die Öffnungsbrandung eines Wirkstoffmittelbehälters kann somit in die Rastkerbe eingesetzt werden. Durch diese Maßnahme ist sichergestellt, dass die auf die Auskragung aufgesetzte und in die Rasterkerbe eingesetzte Öffnungsberandung eines Wirkstoffmittelbehälters in besonderem Maße abrutsch- und vorrutschgesichert ist. Die Arbeitssicherheit wird durch die Rastkerbe der Auskragung erheblich erhöht.

Es wird ein Vorteil erreicht, indem der Spülkopf im Mittelbereich der Spüleinrichtung wenigstens ein sich radial erstreckendes Auflageelement aufweist. Über derartige, an dem Spülkopf angeordnete Auflageelemente kann durch Aufsetzen der Öffnungsberandung eines Wirkstoffmittelbehälters die zum Aktivieren der Spüleinrichtung erforderliche axiale Kraftwirkung aufgebracht werden. Durch die Anordnung des wenigstens einen Auflageelements im Mittelbereich der Spüleinrichtung ist dann sichergestellt, dass sich die im Bereich des äußeren Endes der Spüleinrichtung befindliche Spüldüse während eines Spülvorganges entsprechend weit im Inneren des Wirkstoffmittelbehälters befindet. Dadurch wird ein Spülen eines tiefer gelegenen Bereichs, insbesondere des Bodenbereichs, des Wirkstoffmittelbehälters ermöglicht. Zudem wird ein Austreten von mit Wirkstoffmittel versetztem Spülmittel und somit eine Gefährdung einer Bedienperson effektiv vermieden.

Es ist vorgesehen, dass sich der Mittelbereich der Spüleinrichtung etwa an den Bereich des äußeren Endes der Spüleinrichtung anschließt und sich in axialer Richtung der Spüleinrichtung erstreckt.

Es ist von besonderem Vorteil, dass das wenigstens eine Auflageelement vom äußeren Ende der Spüleinrichtung zwischen 60 mm und 250 mm, bevorzugt zwischen 80 mm und 140 mm, besonders bevorzugt 105 mm beabstandet ist. Durch diese Maßnahme ist sichergestellt, dass in der beschriebenen Weise tiefer liegende Bereiche, insbesondere der Bodenbereich, eines Wirkstoffmittelbehälters, gespült werden kann. Zusätzlich wird die Möglichkeit geschaffen, auch größere Wirkstoffmittelbehälter in der beschriebenen Weise zu spülen.

Es ist vorteilhaft, die Auflageelemente zueinander äquidistant beabstandet sind und gleiche Winkel einschließen. Durch das Vorsehen mehrerer, äquidistant beabstandeter Auflageelemente kann die Öffnungsberandung des Wirkstoffmittelbehälters gleichmäßig auf die Auflageelemente aufgesetzt werden. Durch ein gleichmäßiges Aufsetzen wird in vorteilhafter Weise die Gefahr des Verkantens des aufgesetzten Wirkstoffmittelbehälters minimiert. Dies erhöht die Arbeitssicherheit und senkt zudem bei Aufbringen der zum Aktivieren der Spüleinrichtung erforderlichen Kraft durch ein symmetrischen Einleiten der Kraft in die Auflageelemente den Verschleiß der Spüleinrichtung.

Die zwischen den Auflageelementen eingeschlossenen Winkel hängen von der Anzahl der vorhandenen Auflageelemente ab. Sie können beispielsweise identisch sein und 180°, 120°, 90° oder 75° betragen oder andere Beträge aufweisen.

Alternativ können auch andere geeignete Geometrien auftreten. Beispielsweise können sich gleiche Winkel paarweise gegenüber liegen.

Es ist vorteilhaft, dass die Gleitverschiebung des Spülkopfes gegen den Leitungsabschnitt mittels einer, insbesondere axialen, Kraftwirkung gegen die Auflageelemente und/oder die Auskragung bewirkt wird. In vorteilhafter Weise wird durch die Gleitverschiebung die Spüleinrichtung aktiviert und dem Spülmittel ein Austreten mit hoher Strömungsgeschwindigkeit durch die Spüldüse ermöglicht. Die zur Aktivierung der Spüleinrichtung erforderliche axiale Kraft wird vermittels des auf die Auskragung oder die Auflageelemente des Spülkopfes aufgesetzten Wirkstoffmittelbehälters durch eine Bedienperson aufgebracht. Durch diese Maßnahme ist sichergestellt, dass das Spülmittel erst bei korrekt aufgesetztem Wirkstoffmittelbehälter in diesen einströmen kann. Ein unkontrolliertes Austreten des Spülmittels aus der Spüldüse und/oder des mit Wirkstoffmittel versetzten Spülmittels aus dem Wirkstoffmittelbehälter ist somit ausgeschlossen. Die Arbeitssicherheit für die Bedienperson ist somit wesentlich erhöht.

Die axiale Kraftwirkung zum Aktivieren der Spüleinrichtung erfolgt in bevorzugter Weise vom äußeren Ende der Spüleirichtung aus gesehen in Richtung des Mittelbereichs der Spüleinrichtung.

Analog zum beschriebenen Spülen eines, beispielsweise flaschen- oder kanisterartig ausgeführten, Wirkstoffmittelbehälters ist das Spülen eines Messbehältnisses zu behandeln. Ein derartiges Messbehältnis wird beispielsweise von einer Bedienperson während der Erzeugung der Spritzbrühe zur Dosierung der einzuspülenden Wirkstoffmittelmenge genutzt. Das Messbehältnis kann als Messbecher oder Messzylinder ausgeführt sein. Es ist in analoger Weise mit der beschriebenen Spüleinrichtung zu spülen, um es von anhaftenden Wirkstoffmittelresten zu befreien.

Weitere Einzelheiten der Erfindung sind der Beispielsbeschreibung und den Zeichnungen zu entnehmen. Die Zeichnungen zeigen
- Fig.1: die Einspülvorrichtung einer landwirtschaftlichen Feldspritze in perspektivischer Darstellung von schräg oben,
- Fig.2: die Einspülvorrichtung einer landwirtschaftlichen Feldspritze in einer weiteren perspektivischen Darstellung von schräg oben,
- Fig.3: die Spüleinrichtung in einer seitlichen Darstellung,
- Fig.4: die Spüleinrichtung perspektivischer Darstellung,
- Fig.5: den Spülkopf der Spüleinrichtung in seitlicher Darstellung,
- Fig.6: den Spülkopf der Spüleinrichtung ein einer weiteren seitlichen Darstellung und
- Fig.7: eine weitere Ausführungsform der Spüleinrichtung in seitlicher Darstellung.

Landwirtschaftliche Feldspritzen werden verwendet, um Wirkstoffmittel in Form einer Spritzbrühe über einer landwirtschaftlichen Nutzfläche und/oder einem Nutzpflanzenbestand auszubringen. Als Wirkstoffmittel kommen dabei üblicherweise Düngemittel und/oder Pflanzenschutzmittel, wie beispielsweise Fungizide, Herbizide oder Pestizide, zum Einsatz.

Zu diesem Zweck weisen landwirtschaftliche Feldspritzen üblicherweise einen Vorratsbehälter auf, in welchem große Mengen der auszubringenden Spritzbrühe bevorratet werden. Über einen Flüssigkeitskreislauf wird die Spritzbrühe in einstellbaren Mengen Ausbringeinrichtungen zugeführt und über diese ausgebracht.

Die Wirkstoffmittel liegen in konzentrierter Form in kleinen Gebinden, den Wirkstoffmittelbehältern 1, vor. In ihrer konzentrierten Form können die Wirkstoffmittel beispielsweise als Flüssigkeit, als Pulver oder als Granulat vorliegen. Es ist vorgesehen, dass zur Erzeugung der auszubringenden Spritzbrühe die konzentrierte Form der Wirkstoffmittel mit einer Trägerflüssigkeit verdünnt werden. Als Trägerflüssigkeit wird typischerweise Wasser genutzt.

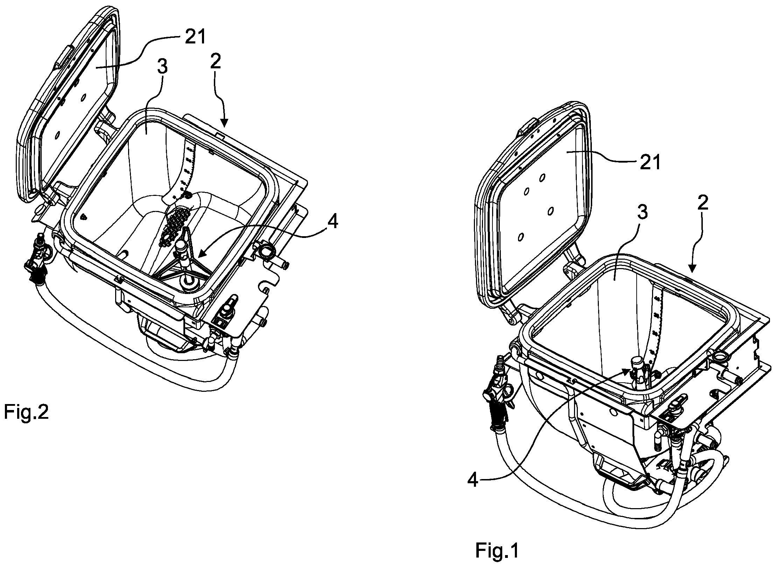

Die Erzeugung der Spritzbrühe erfolgt in einer Einspülvorrichtung 2, wie sie in den Fig. 1 und 2 gezeigt ist. Die Einspülvorrichtung umfasst einen Einspülbehälter 3 und ist fluidleitend mit dem Flüssigkeitskreislauf der Feldspritze verbunden. Die konzentrierte Form der Wirkstoffmittel wird aus dem Wirkstoffmittelbehälter 1 in den Einspülbehälter 3 gegeben und dort mit der Trägerflüssigkeit vermischt. Das entstehende Gemisch aus Trägerflüssigkeit und Wirkstoffmittel wird über den Flüssigkeitskreislauf der Feldspritze dem Vorratsbehälter zugeführt.

Es ist auch möglich zur bedarfsgerechten Erzeugung einer Spritzbrühe die Trägerflüssigkeit mit mehreren verschiedenen Wirkstoffmitteln zu versetzen. Diese können dann in verschiedener Form (als Flüssigkeit, als Pulver, als Granulat) vorliegen. Verschiedene Wirkstoffmittel werden vorzugsweise nacheinander in der beschriebenen Weise über die Einspülvorrichtung der Trägerflüssigkeit zugeführt.

Aufgrund der hohen Konzentration der Wirkstoffmittel ist eine exakte Dosierung wesentlich, da sich bereits kleine Schwankungen der Wirkstoffmittelmenge stark auf die deren Konzentration in der Spritzbrühe auswirken können. Daher kann zur Dosierung der Wirkstoffmittelmenge von einer Bedienperson auf Messbehältnisse, wie beispielsweise Messbecher oder Messzylinder zurückgegriffen werden.

Aus diesem Grund sollen die folgenden Ausführungen nicht auf Wirkstoffmittelbehälter 1 beschränkt sein, sondern sich auf Behältnisse erstrecken, die zum Erzeugen einer Spritzbrühe mit der konzentrierten Form der Wirkstoffmittel in Kontakt stehen.

Beim Entleeren des Wirkstoffmittelbehälters 1 bleiben Restmengen des Wirkstoffmittels innerhalb des Wirkstoffmittelbehälters 1 zurück. Beispielsweise haften sie an den Wandungen und/oder am Boden der Wirkstoffmittelbehälter 1 an.

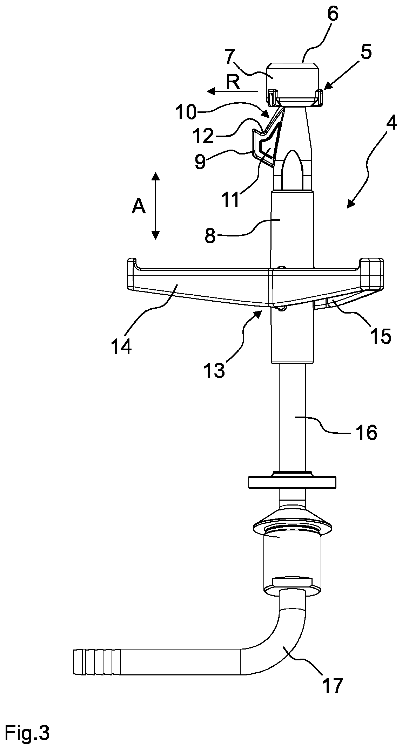

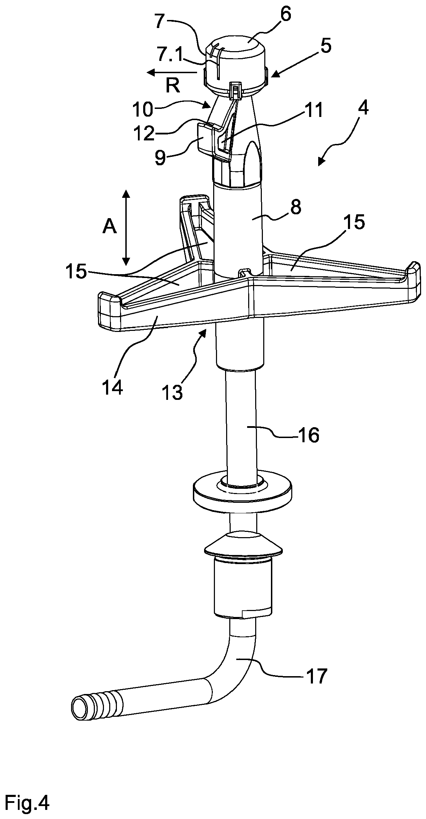

Zum Spülen des Wirkstoffmittelbehälters 1 weist die Einspülvorrichtung 2 eine Spüleinrichtung 4 auf, wie sie in den Fig. 3 und 4 gezeigt ist. Die Spüleinrichtung 4 ist im Wesentlichen zylindrisch, insbesondere als Spüllanze, ausgebildet und umfasst im Bereich 5 ihres äußeren Endes 6 eine Spüldüse 7. Die Spüldüse 7 ist eingerichtet, Spülmittel mit hoher Strömungsgeschwindigkeit auszubringen. Dabei erstreckt sich der von der Spüldüse 7 ausgebrachte Spülmittelkegel im Wesentlichen in radialer Richtung R der Spüleinrichtung 4.

Der Bereich 5 des äußeren Endes 6 der Spüleinrichtung 4 erstreckt sich ausgehend vom (baulichen) äußeren Ende 6 der Spüleinrichtung 4 einige, vorzugsweise höchstens sechs, Zentimeter in axialer Richtung A der Spüleinrichtung 4.

Im gewählten Beispiel der Fig. 3 bis 6 ist die Spüldüse 7 am äußeren Ende 6 der Spüleinrichtung 4 angeordnet bzw. bildet die Spüldüse 7 das äußere Ende 6 der Spüleinrichtung 4.

Die Spüleinrichtung 4 umfasst einen Spülkopf 8, welcher vom äußeren Ende 6 der Spüleinrichtung 4 aus gesehen in axialer Richtung A hinter der Spüldüse 7 angeordnet ist.

In einer alternativen Ausführungsform kann die Spüldüse 7 ein Teil des Spülkopfes 8 sein.

Der Spülkopf weist im Bereich 5 des äußeren Endes 6 der Spüleinrichtung 4 eine Auskragung 9 auf. Die Auskragung 9 ist vom äußeren Ende 6 der Spüleinrichtung 4 in besonders bevorzugter Weise 25 mm beabstandet.

In anderen bevorzugten Ausführungsformen ist die Auskragung 9 vom äußeren Ende 6 der Spüleinrichtung 4 zwischen 20 mm und 40 mm beabstandet.

In alternativen Ausführungsformen kann die Auskragung 9 vom äußeren Ende 6 der Spüleinrichtung 4 zwischen 15 mm und 60 mm beabstandet sein.

Die Auskragung 9 ist auf ihrer dem äußeren Ende 6 der Spüleinrichtung 4 zugewandten Seite hakenförmig ausgeführt. Wie den Fig. 1 bis 4 aufgrund der Einbaulauge der Spüleinrichtung 4 innerhalb der Einspülvorrichtung 2 zu entnehmen ist, entspricht die dem äußeren Ende 6 der Spüleinrichtung 4 zugewandte Seite der Auskragung 9 der Oberseite 10 der Auskragung 9. Die Auskragung 9 kann eine Aussparung 11 aufweisen.

Innerhalb der hakenförmigen Ausformung ihrer Oberseite 10, weist die Auskragung 9 eine Rastkerbe 12 auf.

Im Mittelbereich 13 der Spüleinrichtung 4 weist der Spülkopf 8 wenigstens ein sich in radialer Richtung R der Spüleinrichtung 4 erstreckendes Auflageelement 14 auf. Im Beispiel der Fig. 3 und 4 weist der Spülkopf 8 drei Auflageelemente 14 auf, welche zueinander jeweils Winkel von 120° einschließen. Die Auflageelemente 14 können jeweils eine Aussparung 15 aufweisen.

Die Auflageelemente 14 sind vom äußeren Ende 6 der Spüleinrichtung 4 in besonders bevorzugter Weise 105 mm beabstandet.

In anderen bevorzugten Ausführungsformen sind die Auflageelemente 14 vom äußeren Ende 6 der Spüleinrichtung 4 zwischen 80 mm und 140 mm beabstandet.

In alternativen Ausführungsformen können die Auflageelemente 14 vom äußeren Ende 6 der Spüleinrichtung 4 zwischen 60 mm und 250 mm beabstandet sein.

Alle angegebenen Beabstandungen beziehen sich bevorzugt auf die axiale Position der Mitte der Austrittsöffnung 7.1 der Spüldüse 7.

Der Mittelbereich 13 der Spüleinrichtung 4 schließt etwa an den Bereich 5 des äußeren Endes 6 der Spüleinrichtung 4 an und erstreckt sich in axialer Richtung A der Spüleinrichtung 4 erstreckt.

Vorzugsweise erstreckt sich der Mittelbereich 12 der Spüleinrichtung 4 im Abstand von etwa sechs Zentimetern bis zu einem Abstand von etwa 25 cm vom äußeren Ende 6 der Spüleinrichtung aus gesehen in deren axialer Richtung A.

Im Mittelbereich 13 der Spüleinrichtung 4 mündet ein Leitungsabschnitt 16 in den Spülkopf 8. Der Leitungsabschnitt 16 ist zur Förderung von Spülmittel eingerichtet und ist fluidleitend mit einem Anschlussstück 17 verbunden. Leitungsabschnitt 16 und Anschlussstück 17 sind vom äußeren Ende 6 der Spüleinrichtung 4 aus gesehen in axialer Richtung A der Spüleinrichtung 4 aufeinander folgend an dem dem äußeren Ende 6 der Spüleinrichtung 4 gegenüberliegenden Ende der Spüleinrichtung 4 angeordnet. Das Anschlussstück 17 ist mit dem Flüssigkeitskreislauf der Feldspritze verbunden und dient der Zuführung von Spülmittel zur Spüleinrichtung 4.

Der Spülkopf 8 ist gegenüber dem Leitungsabschnitt 16 gleitverschieblich gelagert und in axialer Richtung A der Spüleinrichtung 4 bewegbar.

Durch die Gleitverschiebung des Spülkopfes 8 in axiale Richtung A der Spüleinrichtung 4 gegen den Leitungsabschnitt 16 ist eine Fluidverbindung zwischen dem Leitungsabschnitt 16 und der Spüldüse 7 herstellbar. Dazu erfolgt die Gleitverschiebung des Spülkopfes 8 vom äußeren Ende 6 der Spüleinrichtung 4 aus gesehen in Richtung des Anschlussstückes 17. Durch eine derartige Gleitverschiebung wird die Spüleinrichtung 4 aktiviert und das Ausbringen des Spülmittels aus der Spüldüse 7 ermöglicht.

Zur Gleitverschiebung des Spülkopfes 8 gegen den Leitungsabschnitt 16 und der damit bewirkten Aktivierung der Spüleinrichtung 4 ist eine Kraftwirkung in axialer Richtung A der Spüleinrichtung 4 erforderlich. Die erforderliche Kraft wird durch eine Bedienperson der Spüleinrichtung 4 vermittels eines zu spülenden Wirkstoffmittelbehälters 1 aufgebracht.

Dazu wird die Öffnungsberandung 18 des Wirkstoffmittelbehälters 1 gegen die Auskragung 9 oder gegen die Auflageelemente 14 gedrückt.

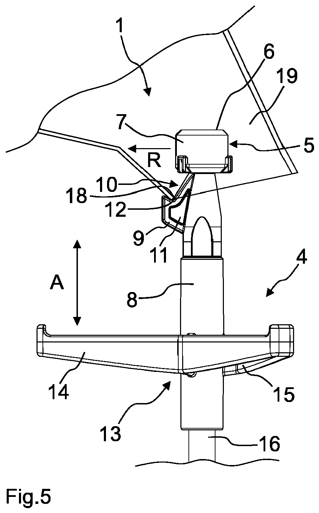

Fig. 5 zeigt beispielhaft, wie die Öffnungsberandung 18 des Wirkstoffmittelbehälters 1 in die Rastkerbe 12 der Oberseite 10 der Auskragung 9 eingesetzt ist. Im in Fig. 5 gezeigten Beispiel befindet sich die Spüldüse 7 während des Spülvorgangs innerhalb des Öffnungsbereichs 19 des Wirkstoffmittelbehälters 1. In diesem Fall wird insbesondere der Öffnungsbereich 19 des Wirkstoffmittelbehälters 1 gespült.

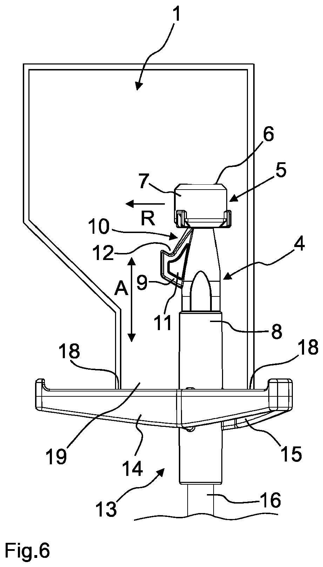

Fig. 6 zeigt beispielhaft, wie die Öffnungsberandung 18 des Wirkstoffmittelbehälters 1 auf die Auflageelemente 14 aufgesetzt ist. Im in Fig. 6 gezeigten Beispiel befindet sich die Spüldüse 7 während des Spülvorgangs innerhalb eines tiefer gelegenen Bereichs des Wirkstoffmittelbehälters 1. In diesem Fall wird bevorzugt der tiefer gelegene Bereich des Wirkstoffmittelbehälters 1 gespült.

Das nach dem Spülen und/oder während des Spülens mit Wirkstoffmittel versetzte Spülmittel tritt durch den Öffnungsbereich 19 des Wirkstoffmittelbehälters 1 in axialer Richtung A der Spüleinrichtung 4 nach unten aus dem Wirkstoffmittelbehälter 1 aus und wird im Einspülbehälter 3 der Einspülvorrichtung 2 aufgefangen. Über den Flüssigkeitskreislauf der Feldspritze wird es dem Vorratsbehälter zugeführt.

Insgesamt wird somit erfindungsgemäß eine Spüleinrichtung 4 bereitgestellt, welche das Spülen von Wirkstoffmittelbehältern 1 verbessert. Die in den Wirkstoffmittelbehältern 1 zurückbleibenden Wirkstoffmittelrestmengen werden minimiert. Insbesondere trägt die erfindungsgemäße Spüleinrichtung 4 dadurch zur Einhaltung gesetzlicher Vorgaben zur Reinigung der Wirkstoffmittelbehälter bei.

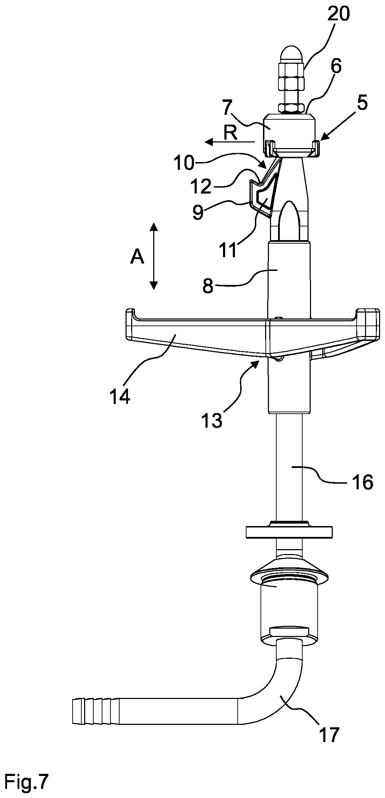

Fig. 7 zeigt eine alternative Ausführungsform der erfindungsgemäßen Spüleinrichtung 4, welche am äußeren Ende 6 der Spüleinrichtung 4 zusätzlich einen Fortsatz 20 auf. Der Fortsatz 20 ist dazu eingerichtet, durch die beim Schließen des Deckels 21 der Einspülvorrichtung 2 auftretende Kraftwirkung in axiale Richtung A der Spüleinrichtung 4 die beschriebene Gleitverschiebung des Spülkopfes 8 gegen den Leitungsabschnitt 16 zu bewirken. Auf diese Weise wird nach der Erzeugung der Spitzbrühe der Einspülbehälter 2 in analoger Weise gespült.

Die zuvor angegebenen Beabstandungen beziehen sich auch im Beispiel der Fig. 7 auf die axiale Position der Mitte der Austrittsöffnung 7.1 der Spüldüse 7.

## Patentansprüche

1. Einspülvorrichtung (2) für eine landwirtschaftliche Feldspritze zur Ausbringung von Flüssigkeiten mit einem Einspülbehälter (3) und einer Spüleinrichtung (4) zum Spülen von Wirkstoffmittelbehältern (1), wobei die Spüleinrichtung (4)
• einen Spülkopf (8) umfasst,
• im Wesentlichen zylindrisch ausgebildet ist,
• ein Anschlussstück (17) zur Zuführung von Spülmittel aufweist,
• im Bereich (5) ihres äußeren Endes (6) eine Spüldüse (7) aufweist und
• mittels Druck aktivierbar ist,
**dadurch gekennzeichnet, dass** der Spülkopf (8) im Bereich (5) des äußeren Endes (6) der Spüleinrichtung (4) eine Auskragung (9) aufweist und die Auskragung (9) auf ihrer dem äußeren Ende (6) der Spüleinrichtung (4) zugewandten Seite eine Rastkerbe (12) aufweist.

2. Einspülvorrichtung (2) nach Anspruch 1, **dadurch gekennzeichnet, dass** die Spüldüse (7) am äußeren Ende (6) der Spüleinrichtung (4) angeordnet ist oder das äußere Ende (6) der Spüleinrichtung (4) bildet.

3. Einspülvorrichtung (2) nach zumindest einem der vorangegangenen Ansprüche, **dadurch gekennzeichnet, dass** die Spüldüse (7) derart eingerichtet ist, dass sich der von der Spüldüse (7) ausgebrachte Spülmittelkegel im Wesentlichen in radialer Richtung (R) der Spüleinrichtung (4) erstreckt.

4. Einspülvorrichtung (2) nach Anspruch 1, **dadurch gekennzeichnet, dass** die Auskragung (9) vom äußeren Ende (6) der Spüleinrichtung (4) zwischen 15 mm und 60 mm, bevorzugt zwischen 20 mm und 40 mm, besonders bevorzugt 25 mm, beabstandet ist.

5. Einspülvorrichtung (2) nach zumindest einem der vorangegangenen Ansprüche, **dadurch gekennzeichnet, dass** die Auskragung (9) auf ihrer dem äußeren Ende (6) der Spüleinrichtung (4) zugewandten Seite hakenförmig ausgebildet ist.

6. Einspülvorrichtung (2) nach zumindest einem der vorangegangenen Ansprüche, **dadurch gekennzeichnet, dass** der Spülkopf (8) im Mittelbereich (13) der Spüleinrichtung (4) wenigstens ein sich radial erstreckendes Auflageelement (14) aufweist.

7. Einspülvorrichtung (2) nach Anspruch 6, **dadurch gekennzeichnet, dass** das wenigstens eine Auflageelement (14) vom äußeren Ende (6) der Spüleinrichtung (4) zwischen 60 mm und 250 mm, bevorzugt zwischen 80 mm und 140 mm, besonders bevorzugt 105 mm beabstandet ist.

8. Einspülvorrichtung (2) nach Anspruch 6 oder 7 **dadurch gekennzeichnet, dass** mehrere Auflageelemente (14) zueinander äquidistant beabstandet sind und gleiche Winkel einschließen.

9. Einspülvorrichtung (2) nach zumindest einem der vorangegangenen Ansprüche 6 bis 8, wobei die Spüleinrichtung (4) einen Leitungsabschnitt (16) zur Förderung von Spülmittel umfasst und der Spülkopf (8) gegenüber dem Leitungsabschnitt (16) in axialer Richtung (A) gleitverschieblich ist, wobei durch die axiale Gleitverschiebung des Spülkopfes (8) gegen den Leitungsabschnitt (16) eine Fluidverbindung zwischen dem Leitungsabschnitt (16) und der Spüldüse (7) herstellbar ist, **dadurch gekennzeichnet, dass** die Gleitverschiebung des Spülkopfes (8) gegen den Leitungsabschnitt (16) mittels einer, insbesondere axialen, Kraftwirkung gegen die Auflageelemente (14) und/oder die Auskragung (9) bewirkt wird.

## Claims

1. Feed-in device (2) for an agricultural field sprayer for discharging liquids, with a feed-in container (3) and a rinsing device (4) for rinsing active substance containers (1), wherein the rinsing device (4)
• comprises a rinsing head (8),
• has a substantially cylindrical shape,
• has an attachment piece (17) for the delivery of rinsing agent,
• has a rinsing nozzle (7) in the region (5) of its outer end (6) and
• is activatable by means of pressure,
**characterized in that** the rinsing head (8) has a projection (9) in the region (5) of the outer end (6) of the rinsing device (4), and the projection (9) has a latching notch (12) on its side directed towards the outer end (6) of the rinsing device (4) .

2. Feed-in device (2) according to Claim 1, **characterized in that** the rinsing nozzle (7) is arranged at the outer end (6) of the rinsing device (4) or forms the outer end (6) of the rinsing device (4).

3. Feed-in device (2) according to at least one of the preceding claims, **characterized in that** the rinsing nozzle (7) is configured in such a way that the cone of rinsing agent discharged from the rinsing nozzle (7) extends substantially in the radial direction (R) of the rinsing device (4).

4. Feed-in device (2) according to Claim 1, **characterized in that** the projection (9) is spaced apart from the outer end (6) of the rinsing device (4) by between 15 mm and 60 mm, preferably by between 20 mm and 40 mm, particularly preferably by 25 mm.

5. Feed-in device (2) according to at least one of the preceding claims, **characterized in that** the projection (9) is hook-shaped on its side directed towards the outer end (6) of the rinsing device (4) .

6. Feed-in device (2) according to at least one of the preceding claims, **characterized in that** the rinsing head (8) has, in the central region (13) of the rinsing device (4), at least one radially extending bearing element (14).

7. Feed-in device (2) according to Claim 6, **characterized in that** the at least one bearing element (14) is spaced apart from the outer end (6) of the rinsing device (4) by between 60 mm and 250 mm, preferably by between 80 mm and 140 mm, particularly preferably by 105 mm.

8. Feed-in device (2) according to Claim 6 or 7, **characterized in that** several bearing elements (14) are spaced apart at equal distances from one another and enclose identical angles.

9. Feed-in device (2) according to at least one of Claims 6 to 8, wherein the rinsing device (4) comprises a conduit portion (16) for conveying rinsing agent, and the rinsing head (8) is slidable relative to the conduit portion (16) in the axial direction (A), wherein a fluid connection between the conduit portion (16) and the rinsing nozzle (7) can be produced by the axial sliding of the rinsing head (8) relative to the conduit portion (16), **characterized in that** the sliding of the rinsing head (8) relative to the conduit portion (16) is effected by means of a force, in particular an axial force, acting against the bearing elements (14) and/or the projection (9).

## Revendications

1. Dispositif d'injection (2) pour un pulvérisateur agricole pour épandre des liquides, comprenant un réservoir d'injection (3) et un dispositif de rinçage (4) pour rincer des récipients de substance active (1), le dispositif de rinçage (4)
- comprenant une tête de rinçage (8),
- étant réalisé sous forme essentiellement cylindrique,
- présentant une pièce de raccordement (17) pour l'alimentation en agent de rinçage,
- présentant une buse de rinçage (7) dans la région (5) de son extrémité extérieure (6) et
- pouvant être activé par pression,
**caractérisé en ce que** la tête de rinçage (8) présente un collet (9) dans la région (5) de l'extrémité extérieure (6) du dispositif de rinçage (4) et le collet (9) présente un cran (12) sur son côté tourné vers l'extrémité extérieure (6) du dispositif de rinçage (4).

2. Dispositif d'injection (2) selon la revendication 1,
**caractérisé en ce que** la buse de rinçage (7) est disposée au niveau de l'extrémité extérieure (6) du dispositif de rinçage (4) ou l'extrémité extérieure (6) forme le dispositif de rinçage (4).

3. Dispositif d'injection (2) selon au moins l'une quelconque des revendications précédentes, **caractérisé en ce que** la buse de rinçage (7) est agencée de telle sorte que le cône d'agent de rinçage déchargé par la buse de rinçage (7) s'étende essentiellement dans la direction radiale (R) du dispositif de rinçage (4).

4. Dispositif d'injection (2) selon la revendication 1, **caractérisé en ce que** le collet (9) est espacé de l'extrémité extérieure (6) du dispositif de rinçage (4) de 15 mm à 60 mm, de préférence de 20 mm à 40 mm, particulièrement préférablement de 25 mm.

5. Dispositif d'injection (2) selon au moins l'une quelconque des revendications précédentes, **caractérisé en ce que** le collet (9) est réalisé en forme de crochet au niveau de son côté tourné vers l'extrémité extérieure (6) du dispositif de rinçage (4).

6. Dispositif d'injection (2) selon au moins l'une quelconque des revendications précédentes, **caractérisé en ce que** la tête de rinçage (8) présente, dans la région centrale (13) du dispositif de rinçage (4), au moins un élément d'appui (14) s'étendant radialement.

7. Dispositif d'injection (2) selon la revendication 6, **caractérisé en ce que** l'au moins un élément d'appui (14) est espacé de l'extrémité extérieure (6) du dispositif de rinçage (4) de 60 mm à 250 mm, de préférence de 80 mm à 140 mm, particulièrement préférablement de 105 mm.

8. Dispositif d'injection (2) selon la revendication 6 ou 7, **caractérisé en ce que** plusieurs éléments d'appui (14) sont espacés les uns des autres de manière équidistante et forment des angles identiques.

9. Dispositif d'injection (2) selon au moins l'une quelconque des revendications précédentes 6 à 8, dans lequel le dispositif de rinçage (4) comprend une portion de conduite (16) pour refouler l'agent de rinçage et la tête de rinçage (8) est déplaçable par coulissement par rapport à la portion de conduite (16) dans la direction axiale (A), une liaison fluidique entre la portion de conduite (16) et la buse de rinçage (7) pouvant être établie par le déplacement de coulissement axial de la tête de rinçage (8) vers la portion de conduite (16), **caractérisé en ce que** le déplacement de coulissement de la tête de rinçage (8) vers la portion de conduite (16) est provoqué au moyen d'une application de force notamment axiale contre les éléments d'appui (14) et/ou le collet (9).
